# EUROPEAN PATENT APPLICATION

(11) **EP 1 580 691 A2**
(43) Date of publication of application: **28.09.2005**
(21) Application number: 05251526.9
(22) Date of filing: 14.03.2005
(51) Int. Cl.: G06T 5/00, G06T 7/00

(54) **Automatic adjustment of acquisition of inspection image**

(30) Priority: 22.03.2004 US 805748
(71) Applicant: Agilent Technologies, Inc., Palo Alto, CA 94306 (US)
(72) Inventor: Chopra, Nasreen, Belmont, California 94002 (US); Li, Jonathan Qiang, Mountain View California 94041 (US); Baharav, Izhak, San Jose, California 95124 (US)
(74) Representative: Jehan, Robert

(57) **Abstract**

An inspection system (100) inspects features of an object (130) using a feedback mechanism. The inspection system (100) includes a processor (150) that receives image data (145 or 165) representing the object (130). The processor (150) is operable to determine parameter modification information (450) from the image data (145 or 165) and modify an image parameter (400 or 600) used during the production of the image data (145 or 165) with the parameter modification information (450). The modified image parameter (400 or 600) is used during the production of subsequent image data (145 or 165) representing the object (130).

## Description

The present invention relates generally to the field of image acquisition inspection systems and methods, in the preferred embodiments to adjustable image acquisition inspection systems using feedback mechanisms.

This application is related by subject matter to U.S. Utility Application for Patent Serial No. 10/699,542, entitled METHOD FOR CHOOSING TESTER DESIGNS AND USE MODEL USING OPERATING CHARACTERISTICS, filed on October 31, 2003.

Inspection systems are used in many different types of industries for a wide variety of purposes. For example, automated inspection systems are commonly employed in the manufacturing industry to inspect objects, such as solder joints and other components, on printed circuit boards (PCBs) for quality control purposes. In many automated inspection systems, the output is a classification of an inspected object into one of a few categories. As an example, in the PCB (printed circuit board) manufacturing industry, a component can be categorized as present or absent, while a solder-joint can be categorized as good or bad. The final classification of the object is made after an image of the object is acquired and processed.

Traditionally, the flow of information in inspection systems is one way, from the image acquisition system to the image processing system to the classifier. The performance of the overall inspection system is measured by the output of the classifier. However, the performance of the classifier is directly affected by the performance of the image acquisition system and the image processing system. Therefore, to improve the performance of the overall system, adjustments are typically made to the image acquisition and image processing systems. For example, adjustments can be made to compensate for variations in the illumination intensity between inspection systems, variations in the PCB design and layout, thickness variations between different PCBs, material changes between different objects and customer-specific requirements.

Currently, the operator of the inspection system manually performs such adjustments. The manual adjustment process is labor-intensive, time consuming and error-prone. Therefore, what is needed is an inspection system capable of automatically making adjustments to the image acquisition and image processing systems based on information from the later stages of the inspection, such as the classification stage.

The present invention seeks to provide improved image acquisition.

According to an aspect of the present invention, there is provided a method of providing feedback during an inspection of an object as specified in claim 1.

According to another aspect of the present invention, there is provided an inspection system as in claim 7.

Embodiments of the present invention provide an inspection system and method for providing feedback during an inspection of an object. The inspection system includes a device to capture an image and a processor that receives image data representing the object. The processor is operable to determine parameter modification information from the image data and modify an image parameter used during the production of the image data with the parameter modification information. The modified image parameter is used during the production of subsequent image data representing the object.

In one embodiment, the image parameter is an image acquisition parameter. Examples of image acquisition parameters include illumination parameters, such as the intensity of illumination, angle of illumination or duration of illumination, image view parameters, such as the positional relationship between the object and a sensor operable to capture an image of the object, and sensor parameters, such as the exposure duration of the sensor or resolution of the sensor. In one feedback embodiment, the processor is an image processor operable to process the image data and calculate the parameter modification information for the image acquisition parameter based on the processed image data. In another feedback embodiment, the processor is a classification processor operable to output a classification and calculate the parameter modification information for the image acquisition parameter based on the classification. For example, if the classification is incorrect as a result of an original setting of the image acquisition parameter, the classification processor is operable to calculate the parameter modification information to correct the incorrect classification and modify the original setting of the image acquisition parameter to a modified setting based on the parameter modification information.

In another embodiment, the image parameter is an image processing parameter. Examples of image processing parameters include processing type parameters, such as the type of algorithm used to process the image data, and processing complexity parameters, such as the complexity of the algorithm used to process the image data. In this embodiment, the processor is a classification processor operable to output a classification and calculate the parameter modification information for the image processing parameter.

By providing feedback between the different parts of the inspection system; adjustments can be made automatically in real-time with improved reliability and increased speed. Furthermore, the invention provides embodiments with other features and advantages in addition to or in lieu of those discussed above. Many of these features and advantages are apparent from the description below with reference to the following drawings.

Embodiments of the present invention are described below, by way of example only, with reference to the accompanying drawings in which:
FIG. 1 is a block diagram illustrating an inspection system, in accordance with embodiments of the present invention;
FIG. 2 is a simplified representation of an inspection system providing feedback, in accordance with embodiments of the present invention;
FIG. 3 is a flow chart illustrating an exemplary process for providing feedback within an inspection system, in accordance with embodiments of the present invention;
FIG. 4 is a simplified representation of an inspection system providing feedback from the image processor to the image acquisition system of the inspection system to modify an image acquisition parameter of the image acquisition system, in accordance with one embodiment of the present invention;
FIG. 5 is a flow chart illustrating an exemplary process for providing feedback within an inspection system to modify an image acquisition parameter based on raw and/or processed image data;
FIG. 6 is a simplified representation of an inspection system providing feedback from the classification processor to the image processor or image acquisition system of the inspection system to modify an image processing parameter or an image acquisition parameter, in accordance with another embodiment of the present invention;
FIG. 7 is a flow chart illustrating an exemplary process for providing feedback within an inspection system to modify an image acquisition parameter based on a classification;
FIG. 8 is a flow chart illustrating an exemplary process for providing feedback within an inspection system to modify an image processing parameter based on a classification;
FIG. 9 is a flow chart illustrating an exemplary process for providing feedback within an inspection system to modify image acquisition parameters or image processing parameters;
FIG. 10 is a pictorial representation of an inspection system;
FIG. 11 is a pictorial representation of an X-ray automated inspection system; and
FIG. 12 is a pictorial representation of an optical automated inspection system.

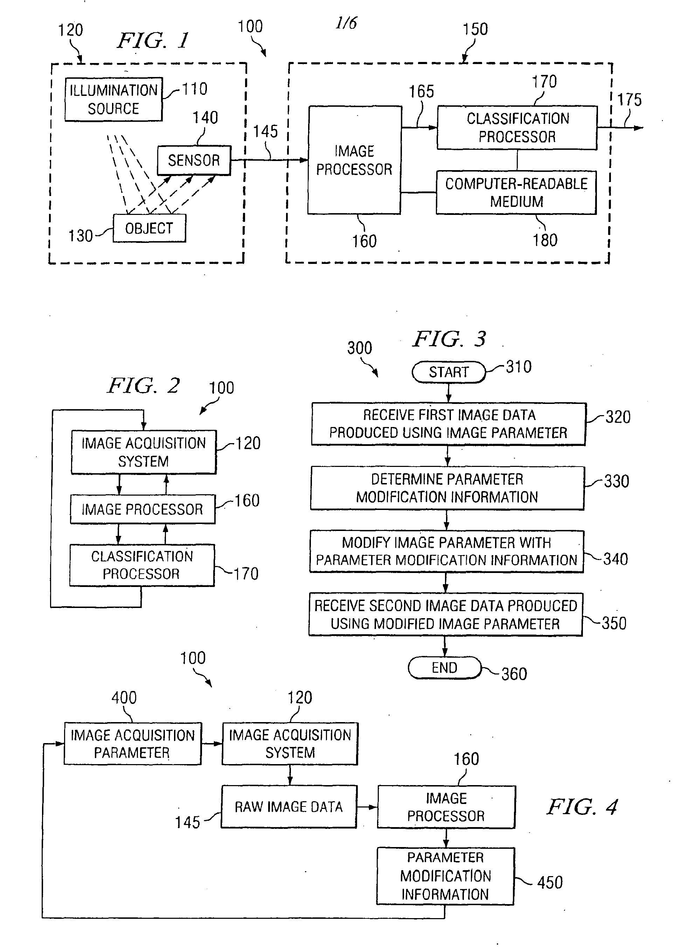

FIG. 1 is a simplified illustration of an inspection system 100 capable of providing internal feedback to automatically make adjustments in real time. The inspection system 100 can be, for example, an automated printed circuit board inspection system, other manufacturing inspection system, luggage inspection system used in airport security or other type of inspection system. The inspection system 100 includes an image acquisition system 120 having an illumination source 110 for illuminating an object 130 and a sensor 140 including a plurality of pixels for capturing an image of the object 130 and producing raw image data 145 representing the image of the object 130. In one embodiment, the illumination source 110 is an X-ray source that produces a beam of X-rays and projects the X-ray beam through the object 130 to the sensor 140. In another embodiment, the illumination source 110 is a light source that emits light towards the object 130. The light is reflected off the surface of the object 130 and received by the sensor 140. In other embodiments, other illumination sources 110 or combinations of illumination sources 110 can be used to illuminate the object 130, and various types of sensors 140 can be used to capture the image(s) of the object 130.

The inspection system 100 further includes a processor 150 for receiving the raw image data 145 representing the image of the object 130. The processor 150 can be a microprocessor, microcontroller, programmable logic device or other type of processing device capable of performing the functions described herein. In addition, the processor 150 can include multiple processors or be a single processor having one or more processing elements (referred to herein as separate processors). For example, as shown in FIG. 1, the processor 150 includes an image processor 160 and a classification processor 170.

The image processor 160 is connected to receive as input the raw image data 145 from the sensor 140, and operates to process the raw image data 145 and output processed image data 165. For example, if the sensor 140 is a color sensor incorporating a color filter array, the image processor 160 can demosaic the image. Demosaicing is a process by which missing color values for each pixel location are interpolated from neighboring pixels. There are a number of demosaicing methods known in the art today. By way of example, but not limitation, various demosaicing methods include pixel replication, bilinear interpolation and median interpolation. Other types of processing that the image processor 160 can perform include noise filtering, image enhancement, image reconstruction for three-dimensional or X-ray images and extraction of features of the object 130 that are of interest. It should be understood that as used herein, the phrase "features of the object" includes measurements of the object 130, components on a surface of or within the object 130 or other indicia of the object 130. An example of an image reconstruction process for three-dimensional images is described in co-pending and commonly assigned International patent application no. WO 2004/086015.

The classification processor 170 is connected to receive as input the processed image data 165 from the image processor 160, and operates to classify one or more features of the object 130 from the processed image data 165 and output a classification 175 of the object feature(s). For example, if an extracted feature is a solder joint on a printed circuit board, the classification processor 170 can analyze the processed image data 165 and output a classification 175 indicating whether the solder joint is good or bad. As another example, if an extracted feature is another component on a printed circuit board, the classification processor 170 can analyze the processed image data 165 and output a classification 175 indicating whether the component is present or absent. Other types of classifications 175 that can be output by the classification processor 170 include measurements of specific aspects of one or more features of the object 130, such as the size of a solder joint or another component, volume of a solder joint or another component, location or position of a component or size of the object 130.

The classification 175 is also stored in a computer-readable medium 180 for later processing or display. The computer-readable medium 180 can be a memory device, such as random access memory (RAM), read-only memory (ROM), flash memory, EEPROM, disk drive, compact disk, floppy disk or tape drive, or any other type of storage device. Additional processing information can also be stored on the computer-readable medium 180 and accessed by the image processor 160 and classification processor 170. For example, such processing information can include various processing parameters, such as algorithms that can be used to process the raw or processed image data 145 or 165, respectively, and varying complexities of the algorithms used to process the raw or processed image data 145 or 165, respectively. As another example, such processing information can include feature specifications or other metrics against which the processed image data 165 can be measured to determine the classification 175.

In traditional inspection systems, the flow of data is in one direction, from the image acquisition system 120 to the image processor 160 to the classification processor 170. The performance of the inspection system is measured by the output of the classification processor 170, and any adjustments that need to be made to the image acquisition system 120 or image processor 160 are conventionally made manually, off-line. The manual adjustment process is labor-intensive, time consuming and error-prone.

Therefore, in accordance with embodiments of the present invention, adjustments are made automatically with improved reliability and increased speed by altering the flow of data to provide feedback between the various parts of the inspection system 100. For example, as shown in FIG. 2, feedback from the image processor 160 and classification processor 170 are provided to the image acquisition system 120 to modify one or more parameters of the image acquisition system 120, such as the settings of the illumination source or the sensor. In addition, feedback from the classification processor 170 is provided to the image processor 160 to modify one or more parameters of the image processor 160, such as the type of algorithm or complexity of algorithm used to process the raw image data.

In one implementation embodiment, feedback is provided only in a "tuning" mode of the inspection system 100 instead of during the run-time to prevent any impact to the in-line running time. In another implementation embodiment, feedback is provided in real time during the operation of the inspection system 100, to compensate for drift in various parameters. In a further implementation embodiment, feedback is provided during a "learning" mode for a batch of objects, such as printed circuit boards. For example, while in a "leaming" mode, the inspection system 100 acquires multiple images of the object, each image being taken using a different illumination setting and/or view. The image processor 160 and classification processor 170 determine the optimal images and algorithms that are needed to produce an optimal classification of the object. The inspection system 100 acquires the optimal images and uses the optimal algorithms when running at full production speed.

FIG. 3 is a flow chart illustrating an exemplary process 300 for providing feedback within an inspection system, in accordance with embodiments of the present invention. The feedback process begins at block 310. At block 320, first image data representing the object is received. The first image data is produced using at least one image parameter. For example, the first image data can be raw image data representing an image of an object or processed image data. The image parameter can be an image acquisition parameter related to the illumination, a view or sensor setting used when the image was acquired or an image processing parameter related to the algorithm(s) used in processing the image data. From the received image data, parameter modification information is determined at block 330. The parameter modification information is used to modify the image parameter at block 340 to improve the performance of the inspection system.

In one embodiment, if the received image data includes data outside a predetermined tolerance for a specific image parameter, parameter modification information is calculated to modify the specific image parameter to produce image data within the tolerance for that specific image parameter. For example, if the average reflected illumination intensity over the image or over a portion of the image is below a predetermined threshold, the illumination intensity of the illumination source is increased by an amount sufficient to produce image data having an average reflected illumination intensity above the threshold. Other examples are discussed below in connection with FIG. 4.

In another embodiment, if the classification of the object is incorrect, e.g., as determined by the operator of the inspection system or if the inspection system is unable to classify the object, parameter modification information is calculated to modify one or more of the image parameters used to capture the first image data to correct the classification of the object or to enable the inspection system to classify the object. For example, if it is determined that the incorrect classification is due to the type of algorithm used to process the image data, the parameter modification information identifies a different algorithm to be used to process the image data and produce a correct classification. The cause of the incorrect classification is determined by the operator or automatically by the system using a diagnostic algorithm that analyzes the image data and compares the image data to predetermined criteria (e.g., thresholds) for each of the image parameters.

At block 350, second image data representing the object is received. The second image data is produced using the modified image parameter. The feedback process ends at block 360. It should be understood that in other embodiments, the feedback process can continually provide feedback to make adjustments to one or more of the image parameters, as needed.

FIG. 4 is a simplified representation of an inspection system 100 providing feedback from the image processor 160 to the image acquisition system 120 of the inspection system 100 to modify an image acquisition parameter 400 of the image acquisition system 120, in accordance with one embodiment of the present invention. The image acquisition parameter 400 controls one or more elements of the image acquisition system 120. Examples of image acquisition parameters 400 include, but are not limited to, illumination parameters, such as the intensity of illumination, angle of illumination or duration of illumination, image view parameters, such as the positional relationship between the object and the sensor, and sensor parameters, such as the exposure duration of the sensor or resolution of the sensor.

Using an original setting of the image acquisition parameter 400, the image acquisition system 120 captures an image of the object and provides raw image data 145 representing the image of the object to the image processor 160. The image processor 160 processes the raw image data 145 and determines parameter modification information 450 based on the raw and/or processed image data. The parameter modification information 450 is fed back to the image acquisition system 120 to modify the image acquisition parameter 400 for capturing a subsequent image of the object. Examples of parameter modification information 450 include, but are not limited to, a modification to the power of the X-ray, a modification to the particular areas on the object to focus on, a modification to the integration time of the X-ray, a modification to the view of the object and a modification to the illumination.

For example, the image processor 160 can detect that the image is too dark, too bright or has insufficient dynamic range from the raw image data 145 and can provide parameter modification information 450 to the image acquisition system 120 to adjust the illumination power and duration, and the mode of operation of the sensor. As another example, the image processor 160 can detect that the image has excessive resolution or dynamic range in certain portions of the image, and can provide parameter modification information 450 to the image acquisition system 120 to lower the resolution or dynamic range. In this case, by reducing the acquired resolution or dynamic range, the speed of the image acquisition system 120 is increased. As a further example, the image processor 160 can determine from the raw and/or processed image data that wider-angle images are needed for reliable X-ray reconstruction. In this case, the parameter modification information 450 is fed back to the image acquisition system 120 to acquire more images using a different Z-height. Similarly, for three-dimensional reconstruction of images, the image processor 160 can detect that information is missing in certain areas, due to shadowing or steep angles. In this case, the parameter modification information 450 is fed back to the image acquisition system 120 to change the angle of illumination or types of lighting rings used to illuminate the object.

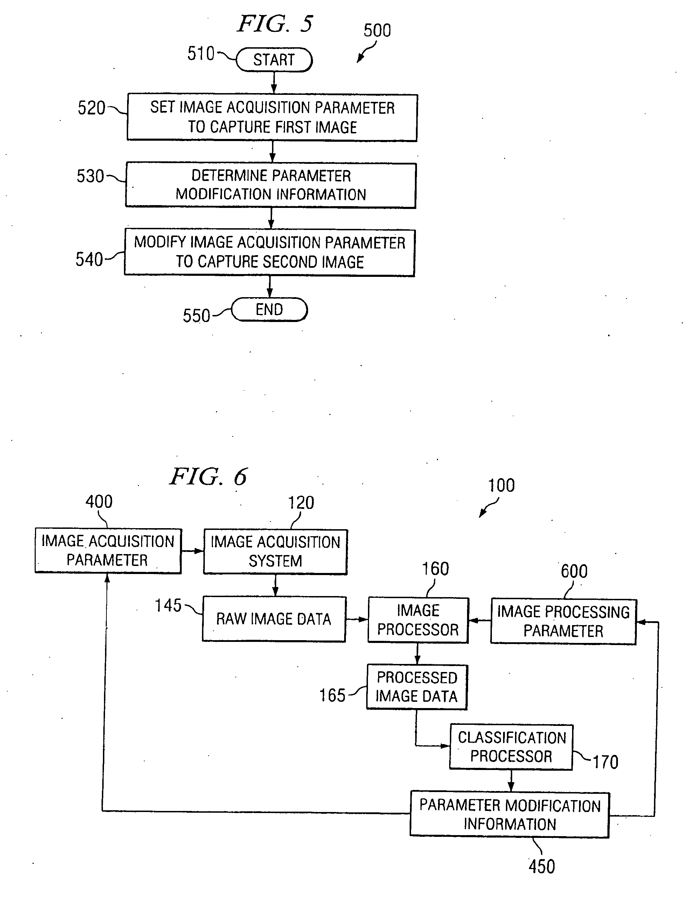

FIG. 5 is a flow chart illustrating an exemplary process 500 for providing feedback within an inspection system to modify an image acquisition parameter based on raw and/or processed image data. The feedback process begins at block 510. At block 520, an image acquisition parameter is set to capture a first image of the object. From the first image, parameter modification information is determined at block 530. The parameter modification information is used to modify the image acquisition parameter at block 540 to capture a second image of the object. The feedback process ends at block 550. It should be understood that in other embodiments, the feedback process can continually provide feedback to make adjustments to one or more of the image acquisition parameters, as needed.

FIG. 6 is a simplified representation of an inspection system 100 providing feedback from the classification processor 170 to the image processor 160 or image acquisition system 120 of the inspection system 100 to modify an image processing parameter 600 or an image acquisition parameter 400, in accordance with another embodiment of the present invention. As discussed above, the image acquisition parameter 400 controls one or more elements of the image acquisition system 120. Similarly, the image processing parameter 600 controls one or more aspects of the image processor 160. Examples of the image processing parameter 600 include a processing type parameter, such as the type of algorithm used to process the image data, and a processing complexity parameter, such as the complexity of the algorithm used to process the image data.

Using an original setting of the image acquisition parameter 400, the image acquisition system 120 captures an image of the object and provides raw image data 145 representing the image of the object to the image processor 160. The image processor 160 processes the raw image data 145 using an original setting of the image processing parameter 600 and outputs processed image data 165 to the classification processor 170. Using the processed image data 165, the classification processor 170 classifies the object and determines parameter modification information 450 based on the classification of the object and/or processed image data 165. The parameter modification information 450 is fed back to either or both of the image acquisition system 120 to modify the image acquisition parameter 400 for capturing a subsequent image of the object and the image processor 160 to modify the image processing parameter 600 for processing the raw image data 145 representing the current image and/or the raw image data 145 representing a subsequent image of the object.

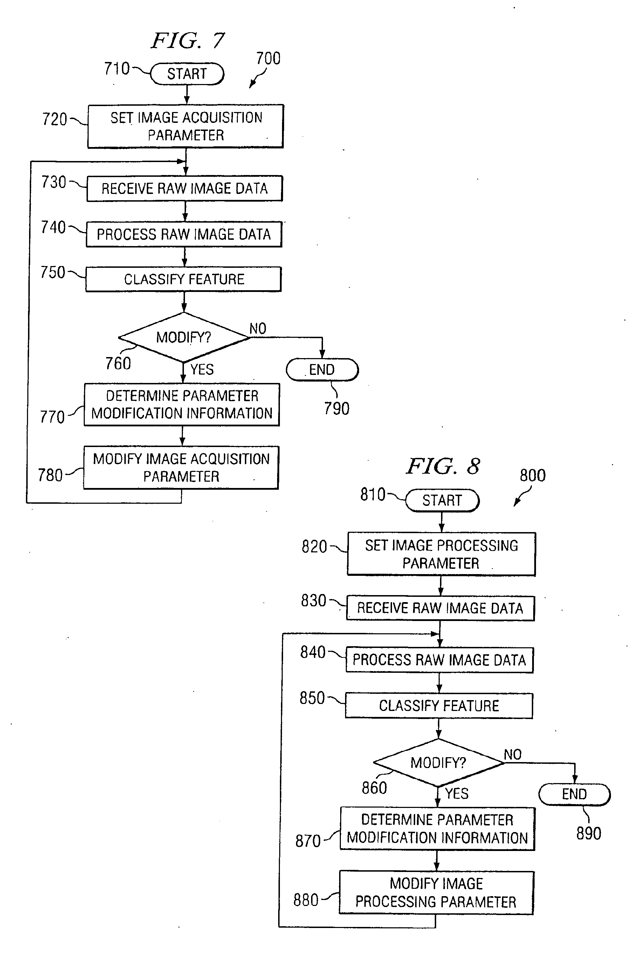

FIG. 7 is a flow chart illustrating an exemplary process 700 for providing feedback within an inspection system to modify an image acquisition parameter based on a classification. The feedback process begins at block 710. At block 720, an image acquisition parameter is set to capture an image of the object and produce raw image data representing the image of the object at block 730. The raw image data is processed to produce processed image data at block 740, and at block 750, one or more features of the object are classified based on the processed image data. At block 760, a determination is made whether one or more of the image acquisition parameters should be modified due to an incorrect classification of one or more of the features.

If modification is necessary, at block 770, parameter modification information is determined, and at block 780, the parameter modification information is used to modify the image acquisition parameter. The modified image acquisition parameter is used to produce subsequent raw image data representing a subsequent image of the object at block 730. If no modification to the image acquisition parameter is necessary, the feedback process ends at block 790. It should be understood that in other embodiments, the feedback process can continually provide feedback to make adjustments to one or more of the image acquisition parameters, as needed.

FIG. 8 is a flow chart illustrating an exemplary process 800 for providing feedback within an inspection system to modify an image processing parameter based on a classification. The feedback process begins at block 810. At block 820, an image processing parameter is set. At block 830, raw image data representing an image of the object is received, and at block 840, the raw image data is processed to produce processed image data. At block 850, one or more features of the object are classified based on the processed image data. At block 860, a determination is made whether one or more of the image processing parameters should be modified due to an incorrect classification of one or more of the features.

If modification is necessary, at block 870, parameter modification information is determined, and at block 880, the parameter modification information is used to modify the image processing parameter. The modified image processing parameter is used to process the raw image data representing the current image of the object and/or a subsequent image of the object at block 840. If no modification to the image processing parameter is necessary, the feedback process ends at block 890. It should be understood that in other embodiments, the feedback process can continually provide feedback to make adjustments to one or more of the image processing parameters, as needed.

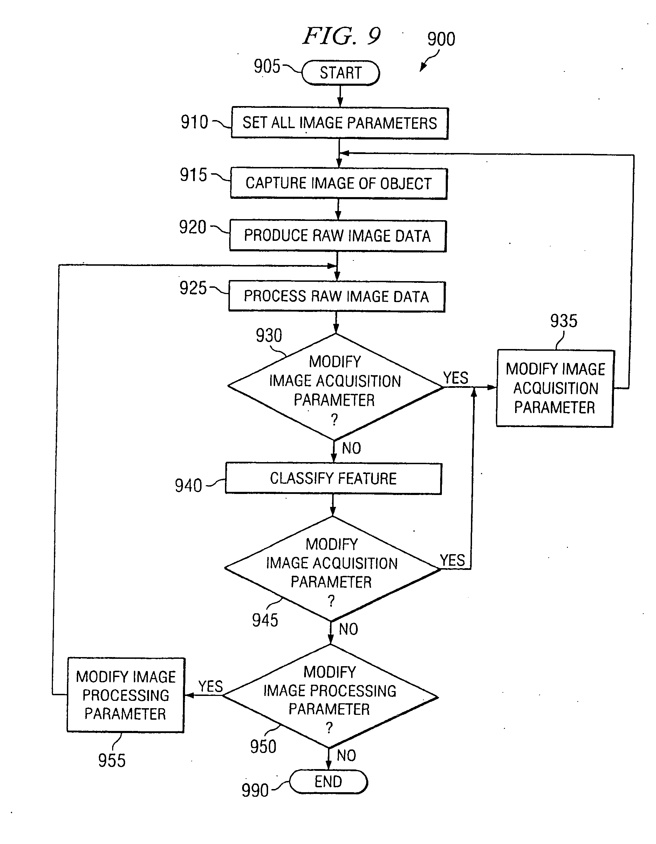

FIG. 9 is a flow chart illustrating an exemplary process 900 for providing feedback within a closed-loop inspection system to modify the image acquisition parameter and/or image processing parameter. The feedback process begins at block 905. At block 910, all image parameters, including image acquisition parameters and image processing parameters, are set. At block 915, an image of the object is captured, and at block 920, raw image data representing the image of the object is produced. The raw image data is processed to produce processed image data at block 925. At block 930, a determination is made whether one or more of the image acquisition parameters should be modified based on the processed and/or raw image data. If modification is necessary, at block 935, parameter modification information is determined and the parameter modification information is used to modify the image acquisition parameter. The modified image acquisition parameter is used to capture a subsequent image of the object at block 915.

If modification of an image acquisition parameter is not necessary, at block 940, one or more features of the object are classified based on the processed image data. At block 945, a determination is made whether one or more of the image acquisition parameters should be modified due to an incorrect classification of one or more of the features. If modification is necessary, at block 935, parameter modification information is determined and the parameter modification information is used to modify the image acquisition parameter. The modified image acquisition parameter is used to capture a subsequent image of the object at block 915. If no modification to the image acquisition parameter is necessary, at block 950, a determination is made whether one or more of the image processing parameters should be modified due to an incorrect classification of one or more of the features.

If modification is necessary, at block 955, parameter modification information is determined and the parameter modification information is used to modify the image processing parameter. The modified image processing parameter is used to process the raw image data representing the current image of the object and/or a subsequent image of the object at block 925. If no modification to the image processing parameter is necessary, the feedback process ends at block 960. It should be understood that in other embodiments, the feedback process can continually provide feedback to make adjustments to one or more of the image parameters, as needed.

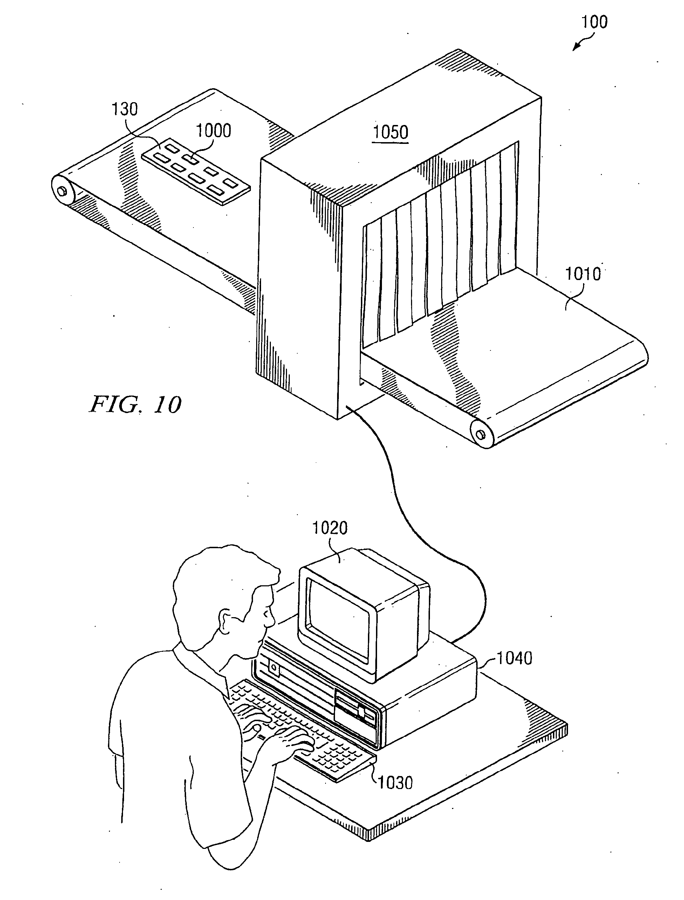

FIG. 10 is a pictorial representation of an exemplary inspection system 100. The inspection system 100 includes an apparatus 1050 that images an object 130 (e.g., a printed circuit board) to inspect features 1000 (e.g., solder joints and other components) of the object 130. The apparatus 1050 includes at least a portion of the image acquisition system 120 of FIG. 1. For example, in one embodiment, the apparatus 1050 includes the illumination source 110 and sensor 140 of FIG. 1. The object 130 is transferred into the apparatus 1050 by a conveyer belt 1010. Image data representing an image of the object 130 is transmitted to a computer 1040 that embodies image processor 160 and classification processor 170 (both shown in FIG. 1) for processing the image data and classifying the features 1000 of the object 130. The computer 1040 provides parameter modification information generated by the image processor 160 and/or classification processor 170 to the apparatus 1050 to modify one or more image acquisition parameters. Moreover, the classification processor 170 provides image acquisition parameters to the image processor 160 to modify one or more image processing parameters.

Due to the large number of features 1000 of the object 130, it is usually not feasible for the operator to inspect all of the features 1000. Therefore, only images of the features 1000 that were automatically classified by the system 100 as defective or indicating a problem are typically presented to the operator on a display 1020. The image itself, processed image data representing the image and/or the classification is displayed on the display 1020. A user interface 1030 (e.g., keyboard, mouse, touch screen, light pen or other interface) allows the operator to control the information displayed on the display 1020. In addition, the user interface 1030 enables the operator to cause the classification processor to provide parameter modification information to the image processor and/or image acquisition system when the operator determines the displayed classification is incorrect. With the automatic provision of parameter modification information in accordance with the present invention, the quality of the information displayed to the user is improved, thus reducing or eliminating the time needed for manual adjustments by the user. As a result, throughput is increased and errors are minimized.

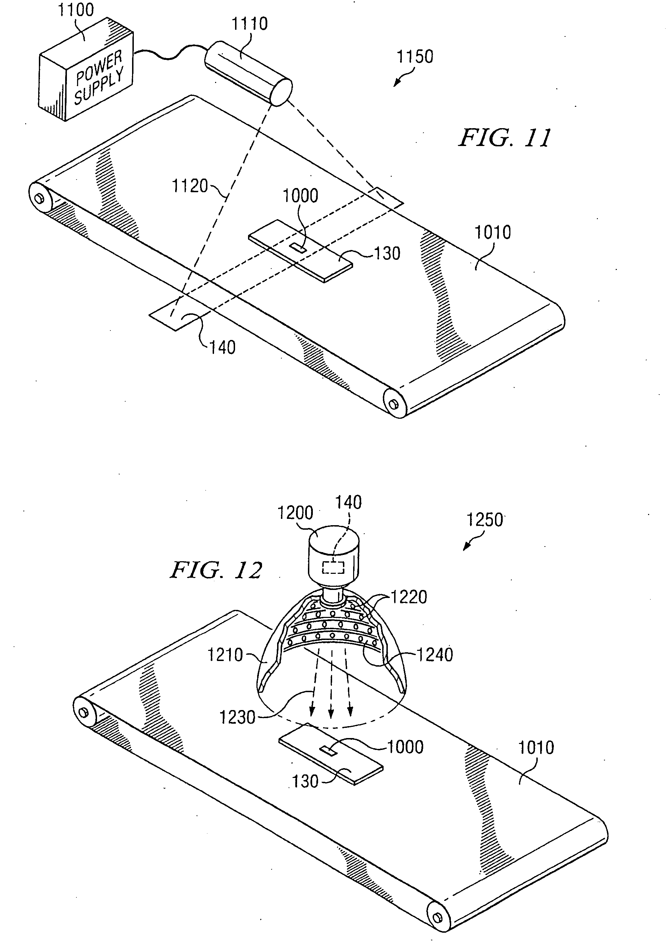

FIG. 11 is a pictorial representation of a simplified, exemplary X-ray automated inspection system 1150. The X-ray automated inspection system 1150 shown in FIG. 11 forms at least a portion of an embodiment of the image acquisition system 120 of FIG. 1. The X-ray automated inspection system 1150 includes a power supply 1100 for producing and impressing a high voltage upon an X-ray tube 1110, which in turn, generates X-rays. The X-rays are emitted in a fan beam 1120 that projects down through an object 130 or portion of an object 130 passing through the beam 1120 on a conveyer belt 1010. For example, as shown in FIG. 11, the beam 1120 passes through a portion of the object 130 containing a feature 1000 of interest.

The beam 1120 impinges upon a sensor 140 to produce an image based on the cross-sectional density of the object 130, including feature 1000. In one embodiment, the sensor 140 includes a row of detector elements forming a linear array. Typically, there are between 300 and 700 individual detector elements arranged in a linear array. The linear array is sequentially scanned as the object 130 is moved over the sensor by the conveyor belt 1010, and the image generated is a two-dimensional "gray scale" raster image. Raw image data representing the raster image is sent to a processor (not shown) in accordance with the present invention for analysis and classification of the feature and/or object, as described above in connection with FIG. 10. In addition, the processor can provide parameter modification information to either or both of the power supply 1100 and the sensor 140 to modify one or more image acquisition parameters.

FIG. 12 is a pictorial representation of an optical automated inspection system 1250. The optical inspection system 1250 shown in FIG. 12 forms at least a portion of an embodiment of the image acquisition system 120 of FIG. 1. The optical automated inspection system 1250 includes a light ring 1210 containing circular arrays 1240 of light-emitting elements 1220 (e.g., light-emitting diodes) arranged concentrically about the optical axis of an aperture of a camera 1200. Light 1230 emitted from the light-emitting elements 1220 illuminates the surface of an object 130 placed under the light ring 1210 by the conveyer belt 1010. Light reflected off the surface of the object 130 is received by an image sensor 140 in the camera 1200. The image sensor 140 captures an image of the object 130 or of one or more features 1000 on the surface of the object 130. For example, the image sensor 140 can be a CCD or CMOS image sensor capable of producing raw image data representing the image. The raw image data is sent to a processor (not shown) in accordance with this embodiment for analysis and classification of the feature and/or object, as described above in connection with FIG. 10. In addition, the processor can provide parameter modification information to either or both of the light ring 1210 and the sensor 140 to modify one or more image acquisition parameters.

As will be recognized by those skilled in the art, concepts taught herein can be modified and varied over a wide range of applications.

The disclosures in United States patent application No. 10/805,748, from which this application claims priority, and in the abstract accompanying this application are incorporated herein by reference.

## Claims

1. A method of providing feedback during an inspection of an object (130), the method including the steps of:
receiving (320) first image data (145 or 165) representing the object (130), the first image data (145 or 165) being produced using an image parameter (400 or 600);
determining (330) parameter modification information (450) for the image parameter from the first image data;
modifying (340) the image parameter (400 or 600) to a modified image parameter (400 or 600) with the parameter modification information (450); and
receiving (350) second image data (145 or 165) representing the object (130), the second image data (145 or 165) being produced using the modified image parameter (400 or 600).

2. A method as in claim 1, wherein the image parameter is an image acquisition parameter (400), and wherein said determining includes processing (740) the first image data (145) to calculate (770) the parameter modification information (450) for the image acquisition parameter (400).

3. A method as in claim 1, wherein the image parameter is an image acquisition parameter (400), and wherein said producing the first image data (145) includes capturing (520) a first image of the object (130), and wherein said producing the second image data (145) includes capturing (540) a second image of the object (130).

4. A method as in claim 1, wherein the image parameter is an image acquisition parameter (400), and wherein said determining includes determining (945) an incorrect classification of at least one feature of the object (130) based on the fist image data (145) as a result of an original setting of the image acquisition parameter (400), calculating the parameter modification information (450) to correct the incorrect classification and modifying (935) the original setting of the image acquisition parameter (400) to a modified setting based on the parameter modification information (450).

5. A method as in any preceding claim, wherein the at lest one parameter is an image processing parameter (600), and wherein said determining includes determining (860) an incorrect classification of at least one feature of the object (130) based on the first image data (165) as a result of an original setting of the image processing parameter (600), calculating (870) the parameter modification information (450) to correct the incorrect classification and modifying (880) the original setting of the image processing parameter (600) to a modified setting based on the parameter modification information (450).

6. A method as in claim 5, wherein said producing the first image data includes processing (840) raw image data (145) representing an image of the at least one feature of the object (130) using the original setting of the image processing parameter (600) to produce the first image data (165), and wherein said producing the second image data includes processing (840) the raw image data (145) using the modified setting of the image processing parameter (600) to produce the second image data (165).

7. An inspection system for providing feedback during an inspection of an object (130), said inspection system including:
a processor (150) connected to receive first image data (145 or 165) representing the object (130), the first image data 9145 or 165) being produced using an image parameter (400 or 600), said processor (150) being operable to determine parameter modification information (450) for the image parameter (400 or 600) from the first image data (145 or 165) for use in producing second image data (145 or 165) representing the object (130).

8. An inspection system as in claim 7, including:
a sensor (140) disposed in relation to the object (130) to receive illumination projected from the object (130), capture a first image of the object (130) and produce first raw image data (145) representing the first image, said sensor (140) being connected to provide the first raw image data (145) representing the first image, said sensor (140) being connected to provide the first raw image data (145) to said processor (150).

9. An inspection system as in claim 8, wherein said sensor (140) is configured to capture a second image of the object (130) and produce second raw image data (145) representing the second image using the parameter modification information (450) for the image parameter (400).

10. An inspection system as in claim 7, 8 or 9, wherein the image parameter is at least one of an image acquisition parameter (400) or an image processing parameter (600).
